(19) Europäisches Patentamt
European Patent Office
Office européen des brevets

(11) **EP 4 535 849 A1**

(12) **EUROPEAN PATENT APPLICATION**
published in accordance with Art. 153(4) EPC

(43) Date of publication:
**09.04.2025 Bulletin 2025/15**

(21) Application number: **23810940.9**

(22) Date of filing: **18.05.2023**

(51) International Patent Classification (IPC):
*H04W 16/28* (2009.01)

(52) Cooperative Patent Classification (CPC):
**H04W 16/18; H04W 16/28**

(86) International application number:
**PCT/CN2023/095014**

(87) International publication number:
**WO 2023/226868 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.05.2022 CN 202210580789**

(71) Applicant: **ZTE Corporation**
**Shenzhen, Guangdong 518057 (CN)**

(72) Inventors:
• **ZHOU, Xianwen**
**Shenzhen, Guangdong 518057 (CN)**

• **LIU, Qiaoyan**
**Shenzhen, Guangdong 518057 (CN)**
• **LI, Jianguo**
**Shenzhen, Guangdong 518057 (CN)**
• **WANG, Guoyan**
**Shenzhen, Guangdong 518057 (CN)**
• **ZHANG, Jinchao**
**Shenzhen, Guangdong 518057 (CN)**
• **PANG, Lei**
**Shenzhen, Guangdong 518057 (CN)**

(74) Representative: **Vossius & Partner**
**Patentanwälte Rechtsanwälte mbB**
**Siebertstraße 3**
**81675 München (DE)**

(54) **ANTENNA DIRECTION ADJUSTMENT METHOD AND APPARATUS, BASE STATION, ELECTRONIC DEVICE, AND STORAGE MEDIUM**

(57) The present application presents a method for adjusting antenna directions, an apparatus for adjusting antenna directions, a base station, an electronic device, and a computer-readable storage medium, and relates to the field of wireless communication technology. The method comprises: processing tidal time information of a tidal cell to obtain a plurality of tidal time periods, the tidal cell is a communication cell in which there is a tidal effect; determining a plurality of antenna weights corresponding to the tidal time periods based on the plurality of tidal time periods and neighbor cell information of the tidal cell; and adjusting directions of RF antennas of the tidal cell based on the tidal time periods and their corresponding antenna weights.

```
                 Start
                   |
                   v
  +-----------------------------------------+  S201
  | Process tidal time information of a      |
  | tidal cell to obtain a plurality of      |
  | tidal time periods                       |
  +-----------------------------------------+
                   |
                   v
  +-----------------------------------------+  S202
  | Determine a plurality of antenna weights |
  | corresponding to the tidal time periods  |
  | based on the plurality of tidal time     |
  | periods and neighbor cell information    |
  | of the tidal cell                        |
  +-----------------------------------------+
                   |
                   v
  +-----------------------------------------+  S203
  | Adjust directions of RF antennas of the  |
  | tidal cell based on the tidal time       |
  | periods and their corresponding antenna  |
  | weights                                  |
  +-----------------------------------------+
                   |
                   v
                  End
```

FIG.2

EP 4 535 849 A1

## Description

This application claims priority to Chinese patent application No. 202210580789.7, filed on May 25, 2022, the disclosure of which is incorporated herein by reference in its entirety.

## FIELD

The present application relates to the field of wireless communication technology, and specifically relates to a method for adjusting antenna directions, an apparatus for adjusting antenna directions, a base station, electronic devices, and a computer-readable storage medium.

## BACKGROUND

In a fifth-generation mobile communication network (5th-Generation, 5G), coverage angles of radio frequency (RF) antennas are different due to different application scenarios. After completing an initial deployment of a communication cell, a base station can only provide corresponding communication services to end-users through the RF antennas arranged in the communication cell, which may be unable to provide accurate and high-quality communication quality to end-users, and may reduce use experience at terminals.

## SUMMARY

Embodiments of the present application provide a method for adjusting antenna directions, the method comprises: processing tidal time information of a tidal cell to obtain a plurality of tidal time periods, where the tidal cell is a communication cell in which there is tidal effect; determining a plurality of antenna weights corresponding to the tidal time periods based on the plurality of tidal time periods and neighbor cell information of the tidal cell; and adjusting directions of RF antennas of the tidal cell based on the tidal time periods and the antenna weights corresponding to the tidal time periods .

Embodiments of the present application provide an apparatus for adjusting antenna direction, comprising: a time period division module configured to process tidal time information of a tidal cell to obtain a plurality of tidal time period, where the tidal cell is a communication cell in which there is tidal effect; a weight determination module configured to determine a plurality of antenna weights corresponding to the tidal time periods based on the plurality of tidal time periods and the neighbor cell information of the tidal cell; an adjusting module configured to adjust directions of RF antennas of the tidal cell based on the tidal time periods and the antenna weights corresponding to the tidal time periods.

Embodiments of the present application provide a base station comprising: an adjusting apparatus for antenna directions; the adjusting apparatus for the antenna directions is configured to perform the method for adjusting antenna directions in embodiments of the present application.

Embodiments of the present application provide an electronic device comprising: at least one processor; a memory having at least one computer program stored thereon, the at least one computer program when executed by at least one processor, cause the at least one processor to implement the method for adjusting antenna directions in embodiments of the present application.

Embodiments of the present application provide a computer-readable storage medium having a computer program stored thereon, the computer program when executed by a processor implementing the method for adjusting antenna directions in embodiments of the present application.

The above embodiments and other aspects of the present application and the manner in which they are implemented are provided in the accompanying illustrations, specific embodiments and claims.

## BRIEF DESCRIPTION OF THE DRAWINGS

FIG. 1 shows a schematic diagram of tidal effect provided by an embodiment of the present application.

FIG. 2 shows a flow schematic diagram of a method for adjusting antenna directions provided by an embodiment of the present application.

FIG. 3 shows a schematic diagram of a coverage of radio frequency antennas of a base station provided by an embodiment of the present application.

FIG. 4 shows a flow schematic diagram of a method for adjusting antenna directions provided by a further embodiment of the present application.

FIG. 5 shows a schematic diagram of a structure of a two-dimensional grid model provided by an embodiment of the present application.

FIG. 6 shows a flow schematic diagram of a method for dividing tidal time periods provided by an embodiment of the present application.

FIG. 7 shows a flow schematic diagram of a method for adjusting antenna directions provided by a yet another embodiment of the present application.

FIG. 8 shows a block diagram of a composition of an apparatus for adjusting antenna directions provided by an embodiment of the present application.

FIG. 9 shows a block diagram of a composition of a base station provided by an embodiment of the present application.

FIG. 10 shows a structural diagram of an exemplary hardware architecture of a computing device capable of implementing the method and apparatus for adjusting antenna directions according to an embodiment of the present application.

## DETAILED DESCRIPTION OF EMBODIMENTS

In order to make the objects, technical solutions, and advantages of the present application clearer and more understandable, embodiments of the present application will be described in detail hereinafter in connection with the accompanying drawings. It is to be understood that the embodiments and the features in the embodiments in the present application may be combined with each other in any combination without conflict.

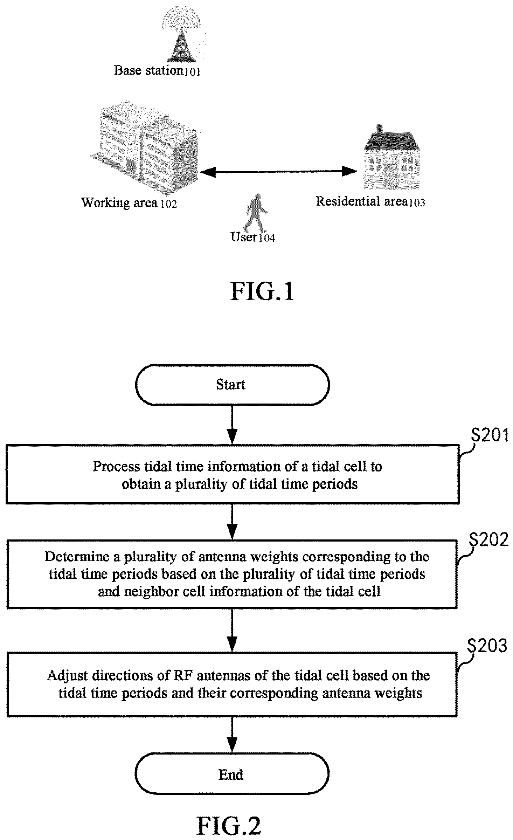

FIG. 1 shows a schematic diagram of a tidal effect provided by embodiments of the present application. As shown in FIG. 1, a base station 101 is a base station used to provide communication services to a working area 102, and a user 104 will move regularly between the working area 102 and a residential area 103 in different time periods. For example, the user 104 will leave the residential area 103 and travel to the working area 102 to work in the morning, while the user 104 will leave the working area 102 and return to the residential area 103 to rest in the evening. The real-time location of this user 104 is changed and there is a regular migration of the user 104 in the communication network, i.e., resulting in a regular tidal effect, which causes this user 104 to obtain different communication resources.

For example, the user 104 needs corresponding communication resource provided by the base station 101 when communicating using a terminal it carries. However, if the user 104 is not in the working area 102, the base station 101 cannot detect the presence of the terminal. However, a current adjustment of RF antennas for the base station is only limited to an adjustment of the RF antennas by means of fixed weights, which cannot be divided into time periods in order to adapt to the above application scenarios in which there is a tidal effect. For example, in the case where there are a plurality of traffic requests in a certain communication cell, adoption of a conventional RF antenna arrangement not only reduces the use efficiency of communication resources, but also reduces the communication quality of the user 104, thereby affecting the user experience at the user terminal.

Embodiments of the present application provide a method for adjusting antenna directions, an apparatus for adjusting antenna directions, a base station, an electronic device, and a computer-readable storage medium. Through the method in the present application, it is able to identify a tidal cell and process tidal time information of the tidal cell to obtain a plurality of tidal time periods, and to identify the movement regularity of the terminals through the tidal time periods; and in turn to determine a plurality of antenna weights corresponding to the tidal time periods based on the plurality of tidal time periods and a neighbor cell information of the tidal cell, so as to enable the base station to divide the tidal time periods, and perform configuration of different antenna weights for the tidal cell and its neighbor cells, thereby adaptively adjusting the directions of the RF antennas of the tidal cell, so as to implement optimization of communication resources of the tidal cell, so that the user can obtain more accurate communication services and improve the communication quality of the terminal.

FIG. 2 shows a flow schematic diagram of a method for adjusting antenna directions provided by an embodiment of the present application. The method for adjusting the antenna directions may be applied to an apparatus for adjusting the antenna direction, which may be set in a base station. As shown in FIG. 2, the method for adjusting the antenna directions in the embodiment of the present application includes, but is not limited to, the following steps.

Step S201, processing tidal time information of a tidal cell to obtain a plurality of tidal time periods.

The tidal cell is a communication cell in which there is a tidal effect.

Step S202, determining a plurality of antenna weights corresponding to the tidal time periods based on the plurality of tidal time periods and neighbor cell information of the tidal cell.

Step S203, adjusting directions of RF antennas of the tidal cell based on the tidal time periods and their corresponding antenna weights.

In the method for adjusting antenna directions provided by present application, processing tidal time information of a tidal cell to obtain the plurality of tidal time periods, where the tidal cell is a communication cell in which there is a tidal effect, and it is able to determine characteristic information of the tidal cell in different tidal time periods, so as to facilitate a base station to make different processing to the tidal cell in different tidal time periods; determining a plurality of antenna weights corresponding to the tidal time periods based on the plurality of tidal time periods and neighbor cell information of the tidal cell, and it may be able to reflect a correspondence between the characteristic information and weights of the RF antennas in different tidal time periods through the antenna weights corresponding to the tidal time periods, so as to enable the antenna weights to more accurately reflect the directions in which the RF antennas need to be adjusted; adjusting directions of the RF antennas of the tidal cell based on the tidal time periods and their corresponding antenna weights, so that the directions of the adjusted RF antennas will be more conducive to providing communication services for the terminals in the tidal cell, so as to enable the terminals to obtain better communication quality faster and enhance the use experience at the terminals.

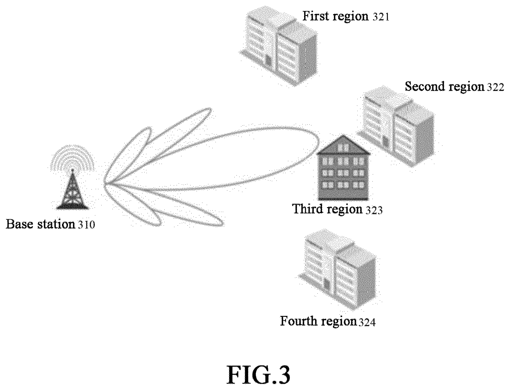

For example, FIG. 3 shows a schematic diagram of a coverage of RF antennas of a base station provided by an embodiment of the present application. As shown in FIG. 3, a base station 310 performs transmission of different communication signals to different regions based on different antenna azimuth angles. For example, a main lobe of the RF antennas of the base station 310 corresponds to a third region 323; other side lobes correspond to a first region 321, a second region 322, and a fourth region 324, respectively.

It is to be understood that, for different regions, the base station 310 will correspondingly configure different antenna weights to adapt to communication needs of different regions, due to the different numbers of terminals in different regions.

For example, distribution of terminals in different regions at different time periods is estimated through an artificial intelligence algorithm to determine a plurality of antenna weights corresponding to the tidal time periods, so as to dynamically adjust the directions of the RF antennas using antenna weights corresponding to different tidal time periods, thereby enhancing utilizing efficiency of communication resources.

As another example, where the plurality of tidal periods may be a plurality of different hours within 24 hours of one day. For example, the first tidal period is from 6:00 to 9:00 in the morning; the second tidal period is from 11:00 to 13:00 at noon; and the third tidal period is from 6:00 to 8:00 in the afternoon, and so on.

A plurality of antenna weights corresponding to the tidal time periods are determined through different tidal time periods and neighbor cell information of the tidal cell, so that the antenna weights can reflect distribution of terminals in the tidal cell, determine states of the cell (such as overlapping coverage, weak coverage, or over-coverage, etc.) between the tidal cell and its neighbor cells, and adjust the directions of the RF antennas of the tidal cell by using antenna weights corresponding to the different tidal time periods, and be able to more accurately adjust the coverage of the RF antennas, and improve utilization efficiency of communication resources.

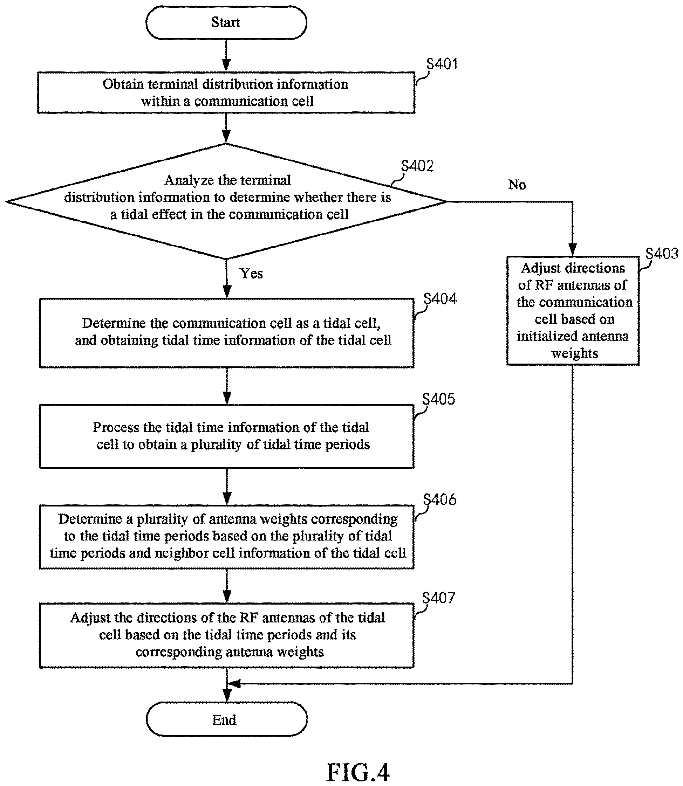

FIG. 4 shows a flow schematic diagram of a method for adjusting antenna directions provided by a further embodiment of the present application. The method for adjusting antenna directions may be applied to an apparatus for adjusting antenna directions, and the apparatus for adjusting antenna directions may be set in a base station. As shown in FIG. 4, the method for adjusting antenna directions in the embodiment of the present application includes, but is not limited to, the following steps.

Step S401, obtaining terminal distribution information within a communication cell.

The terminal distribution information is used to represent a correspondence between the location of each terminal within the communication cell and a coverage of the entire communication cell.

Step S402, analyzing the terminal distribution information to determine whether there is a tidal effect in the communication cell.

For example, the terminal distribution information within different time periods may be compared to determine whether the terminal distribution information within different time periods has changed, and whether a magnitude of the change exceeds a predefined magnitude threshold (e.g., 50%, etc.).

In the case of determining that the terminal distribution information has changed in a certain time period and the magnitude of the change exceeds a predefined magnitude threshold, it is determined that there is a tidal effect in the communication cell in this time period, i.e., there is a regular movement of terminals in the communication cell in this time period.

In the case of determining that there is no tidal effect in the communication cell, step S403 is performed; in the case of determining that there is a tidal effect in the communication cell, step S404 is performed.

At step S403, adjusting directions of RF antennas of the communication cell based on initialized antenna weights.

The initialized antenna weights are antenna weights based on the full time period, e.g., an antenna weight determined based on a full day of 24 hours, or based on historical information within a predefined time period of history (e.g., a week or a month, etc.). Since there is no tidal effect in the communication cell, there is no need to dynamically adjust the directions of its corresponding RF antennas, therefore, the initialized antenna weights can meet the need for adjusting the directions of the RF antennas of the communication cell.

Step S404, determining the communication cell as a tidal cell, and obtaining tidal time information of the tidal cell.

The tidal time information includes: proportion information of the number of terminals in the tidal cell in the predefined time period.

For example, the proportion information of the number of terminals that are on the network in different coverage region in the tidal cell in a plurality of predefined time periods. The coverage of the tidal cell may include a first coverage, a second coverage, and a third coverage; if it is in the first predefined time period, the proportion of terminals in the first coverage is 50%, the proportion of terminals in the second coverage is 30%, and the proportion of terminals in the third coverage is 20%; and in the second predefined time period, the proportion of terminals in the first coverage is 20%, the proportion of terminals in the second coverage is 30%, and the proportion of terminals in the third coverage is 50%.

By means of the above proportion information of number of the two predefined time periods, it can be determined that there is a regular movement occurred by terminals between the first coverage and the second coverage. Among other things, the terminal movement information corresponding to the first predefined time period and the second predefined time period, and a timestamp information corresponding to the movement information, may be recorded to obtain the tidal time information, which facilitates analyzing the terminals in different coverage regions.

Step S405, processing the tidal time information of the tidal cell to obtain a plurality of tidal time periods.

The tidal cell is a communication cell in which there is a tidal effect.

Step S406, determining a plurality of antenna weights corresponding to the tidal time periods based on the plurality of tidal time periods and neighbor cell information of the tidal cell.

Step S407, adjusting the directions of the RF antennas of the tidal cell based on the tidal time periods and their corresponding antenna weights.

It is to be understood that step S405 - step S407 in this embodiment are the same as step S201 - step S203 in the embodiment shown in FIG. 2, and will not be repeated herein.

In the method for adjusting antenna directions provided by present application, whether there is a tidal effect in the communication cell is determined by analyzing the terminal distribution information to determine a type of the communication cell; and in the case of determining that there is no tidal effect in the communication cell, the directions of the RF antennas of the communication cell is adjusted based on initialized antenna weights to satisfy the adjustment needs of the RF antenna. In the case of determining that there is a tidal effect in the communication cell, it is determined that the communication cell is a tidal cell, and tidal time information of the tidal cell is obtained to facilitate subsequent processing of the tidal cell. Moreover, by determining characteristic information of the tidal cell in different tidal time periods, it is convenient for the base station to make different processing of the tidal cell in different tidal time periods; a plurality of antenna weights corresponding to the tidal time periods are determined based on a plurality of tidal time periods and neighbor cell information of the tidal cell, and by means of the antenna weights corresponding to the tidal time periods, it is able to reflect a correspondence between the characteristic information in the different tidal time periods and the weights of the RF antenna, so that the antenna weights can more accurately reflect the directions in which the RF antennas need to be adjusted; the directions of the RF antennas of the tidal cell is adjusted based on the tidal time periods and their corresponding antenna weights, so that the directions of the adjusted RF antennas can be more conducive to providing a communication service for the terminals in the tidal cell, so as to enable the terminals to obtain a better quality of communication more quickly and to enhance use experience at the terminals.

**In** some implementations, the terminal distribution information includes: location information of the terminals; the analyzing of the terminal distribution information in step S402 to determine whether there is a tidal effect in the communication cell may be obtained in the following way: obtaining Direction of Arrival (DoA) information of the communication cell; constructing a two-dimensional grid model including a plurality of grids based on Horizontal Direction of Arrival (HDoA) information and Vertical Direction of Arrival (VDoA) information; determining proportion information of number in a plurality of predefined time periods based on the positional information of respective terminal in the communication cell and the plurality of grids; determining whether there is a tidal effect in the communication cell based on the proportion information of number within the plurality of predefined time periods.

The DoA information includes: HDoA information and VDoA information; the proportion information of the number is a ratio of the number of terminals in the grid to the number of all terminals in the communication cell.

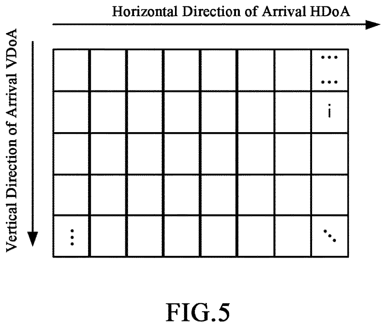

For example, FIG. 5 shows a structure schematic diagram of a two-dimensional grid model provided by an embodiment of the present application. As shown in FIG. 5, the two-dimensional grid model is a two-dimensional grid model constructed with HDoA as the horizontal coordinate and VDoA as the vertical coordinate.

The HDoA may be divided based on the horizontal beam grid step (in unit of degree), for example, setting a range of the HDoA from -60 degree to 60 degree; correspondingly, the VDoA may be divided based on the vertical beam grid step (in unit of degree), for example, setting a range of the VDoA from -20 degree to 20 degree.

For example, based on the location information of respective terminals within the communication cell, the number of terminals within each two-dimensional grid may be counted to obtain the number of terminals corresponding to different two-dimensional grids. As shown in FIG. 5, the number of terminals corresponding to different grids is different. Black dots "..." and the like are used to represent the number of terminals.

**In** some implementations, by comparing the number of terminals in respective grid with the number of all terminals within the communication cell, the proportion information of number within a plurality of predefined time periods may be determined, so that the proportion information of number can reflect a ratio of the number of terminals in the grid to the number of all terminals within the communication cell.

For example, taking one hour as a predefined time period, or taking 2 hours as a predefined time period, the proportion information of number within each predefined time period is determined, so as to determine distribution of the terminals corresponding to each grid; and the proportion information of number within the plurality of predefined time periods is comprehensively analyzed, to determine whether there is a tidal effect in the communication cell.

By comprehensively analyzing the proportion information of number within the plurality of predefined time periods to determine whether there is a tidal effect in the communication cell, it is able to intuitively determine whether there is movement regularity of the terminals in the communication cell within each different predefined time period, so as to determine whether there is a tidal effect in the communication cell, and to facilitate subsequent reasonable allocation of the communication resources of the base station based on the tidal effect, and to enhance utilization efficiency of the communication resources.

**In** some implementations, determining whether there is a tidal effect in the communication cell based on proportion information of number within a plurality of predefined time period includes: determining a set of terminal distribution feature vectors based on the proportion information of number within the plurality of predefined time period; calculating a temporal correlation of two adjacent feature vectors respectively to obtain a plurality of correlation values; and in the case of determining that the plurality of correlation values exceed a predefined correlation value threshold, determining that there is a tidal effect in the communication cell; otherwise, determining that there is no tidal effect in the communication cell.

The set of terminal distribution feature vectors includes a plurality of feature vectors, and the feature vectors are used to characterize the proportion information of a number of terminals in a predefined time period in the communication cell; where the correlation values are used to characterize change information of a proportion of a number of terminals in the communication cell in different time periods.

For example, the set of terminal distribution feature vectors may be represented as: $D=\{X_1, X_2, \cdots, X_i, \cdots, X_m\}$; where $X_i$ represents a terminal distribution feature vector of the $i^{th}$ predefined time period, i is an integer greater than or equal to 1 and less than or equal to m; and m is an integer greater than or equal to 1.

The number of tidal time periods of the communication cell is set to K, K is an integer greater than or equal to 1 and less than or equal to m. For example, K is set equal to 4, i.e., there are 4 tidal time slots in m predefined time periods.

In some implementations, a temporal correlation of two adjacent feature vectors may be calculated respectively to obtain a plurality of correlation values. For example, an inner product of the two adjacent feature vectors may be calculated; or a transpose for $X_i$ may be solved, and then a product operation may be performed on the transpose of $X_i$ and $X_{i+1}$ to obtain a correlation value $X_i^T X_{i+1}$.

For example, the correlation between $X_1$ and $X_2$ is calculated to obtain the first correlation value $X_1^T X_2$; the correlation between $X_2$ and $X_3$ is calculated to obtain the second correlation value $X_2^T X_3$; ......; the correlation between $X_i$ and $X_{i+1}$ is calculated to obtain the ith correlation value $X_i^T X_{i+1}$. A plurality of correlation values may be obtained, represented as $\{X_1^T X_2 、 X_2^T X_3 、 ... 、 X_i^T X_{i+1} 、 ... 、 X_{m-1}^T X_m\}$. T represents solving the transpose for $X_i$.

Then, each correlation value is compared with a predefined correlation value threshold, and in the case of determining that the plurality of correlation values exceed the predefined correlation value threshold, it is determined that there is a tidal effect in the communication cell; otherwise, it is determined that there is no tidal effect in the communication cell.

By means of the different analysis processes described above, it is able to quantitatively analyze proportion information of number in a plurality of predefined time periods, accurately analyze and process the distribution of terminals in the communication cell in each time period, in order to determine whether there is a tidal effect in the communication cell, and to facilitate the subsequent targeted processing for the tidal cell, and to improve the communication quality in the tidal cell.

In some implementations, the terminal distribution information further comprises at least one of: a number of terminals that are radio resource control (RRC) connected, timestamp information, or a number of activated terminals.

The number of terminals that are RRC connected can represent the number of terminals required to be processed by the base station; the number of activated terminals can represent the number of terminals that can normally communicate within the communication cell, i.e., the number of terminals on the network; and the timestamp information is used to represent the time corresponding to the communication information obtained at different points in time or in different time periods.

For example, by obtaining the timestamp information as 5:56 on March 4, 2012 ~ 6:56 on March 4, 2012; and obtaining the communication information of different terminals in a communication cell in this time period (e.g., the number of RRC-connected terminals and/or the number of activated terminals; or the location information of the terminals; or the communication quality information of the terminals, etc.), a comprehensive understanding can be made to the communication situation of respective terminals in the communication cell to facilitate subsequent analysis of the terminal distribution information within the communication cell to determine whether there is a tidal effect in the communication cell.

In some implementations, a specific processing (e.g., adjusting the antenna weights of the RF antennas corresponding to the tidal cell) may be performed on the communication cell in which there is a tidal effect (i.e., the tidal cell) based on the terminal distribution information, so as to reasonably allocate the communication resources of the tidal cell, improve the communication quality of respective terminals within the tidal cell, so that the terminals may obtain a better communication service, and improve the use experience at the terminals.

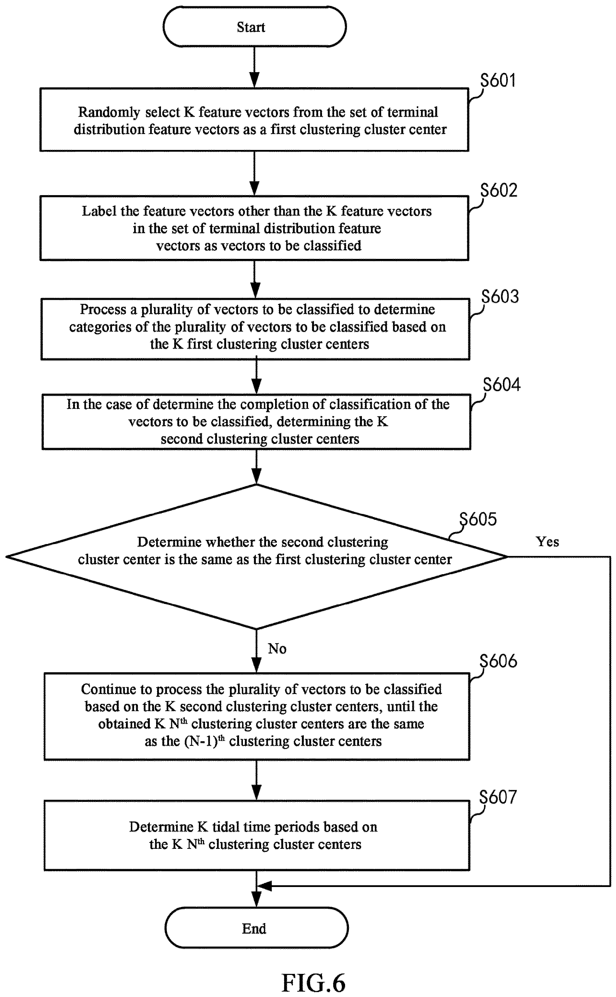

In some implementations, the tidal time information includes: proportion information of the number of terminals in the tidal cell in the predefined time period. The processing of the tidal time information of the tidal cell to obtain a plurality of tidal time periods in step 201 or step 405 may be implemented using the method of dividing the tidal time periods shown in FIG. 6.

FIG. 6 shows a flow schematic diagram of a method for dividing tidal periods provided by an embodiment of the present application. As shown in FIG. 6, the method for dividing tidal time periods includes, but is not limited to, the following steps.

Step S601, randomly selecting K feature vectors from a set of terminal distribution feature vectors as first clustering cluster centers.

For example, the set of terminal distribution feature vectors includes: A feature vectors, then K feature vectors are randomly selected from the A feature vectors as the first clustering cluster centers, where K is an integer greater than 1 and less than A, and A is an integer greater than 1.

Step S602, labeling the feature vectors other than the K feature vectors in the set of terminal distribution feature vectors as vectors to be classified.

If A-K feature vectors remain in the set of terminal distribution feature vectors through the processing of step S602, the A-K feature vectors may be labeled as vectors to be classified, i.e., the number of vectors to be classified is A-K.

Step S603, processing a plurality of vectors to be classified to determine categories of the plurality of vectors to be classified based on the K first clustering cluster centers.

For example, the categories corresponding to the plurality of vectors to be classified are compared with the categories corresponding to the K first clustering cluster centers, respectively, so that the categories of the vectors to be classified can be classified with respect to similarity degrees of the categories of the K first clustering cluster centers, thereby determining the categories of the plurality of vectors to be classified.

Step S604, in the case of determining the completion of classification of the vectors to be classified, determining the K second clustering cluster centers.

The second clustering cluster centers are cluster centers obtained by selecting based on respective feature vectors in the set of classified terminal distribution feature vectors, which can further represent the category information of the respective classified feature vectors, so that the second clustering cluster centers can more conform to the categories of the respective feature vectors in the set of terminal distribution feature vectors.

Step S605, determining whether the second clustering cluster centers are the same as the first clustering cluster centers.

In the case of determining that the second clustering cluster centers are different from the first clustering cluster centers, step S606 is performed; otherwise, the process is ended.

Step S606, continuing to process the plurality of vectors to be classified based on the K second clustering cluster centers, until the obtained K $N^{th}$ clustering cluster centers are the same as the $(N-1)^{th}$ clustering cluster centers.

At each time the clustering cluster centers are reselected for the respective feature vectors in the set of classified terminal distribution feature vectors, the selected K clustering cluster centers are compared with the K clustering cluster centers used at previous time, to determine whether the classification of the respective feature vectors in the set of terminal distribution feature vectors is completed.

In the case of determining that the obtained K $N^{th}$ clustering cluster centers are the same as the $(N-1)^{th}$ clustering cluster center, it is indicated that the classification of the respective feature vectors in the set of terminal distribution feature vectors is completed, and that K category-accurate clustering cluster centers can be obtained.

Step S607, determining K tidal time periods based on the K $N^{th}$ clustering cluster centers.

The K $N^{th}$ clustering cluster centers can represent the feature vectors having K different categories in the set of terminal distribution feature vectors, so as to divide the tidal time periods correspondingly based on the K different categories to obtain the K tidal time periods.

It is to be understood that the respective feature vectors in the set of terminal distribution feature vectors are used to characterize the proportion information of the number of terminals in the communication cell in different tidal time periods, and can characterize the time attributes of the different tidal time periods, and thus, the obtained K tidal time periods can be made more accurate, reflecting the movement regularity of the terminals in the tidal cell.

In some implementations, the processing of the plurality of vectors to be classified based on the K first clustering cluster centers in step S603 to determine the categories of the plurality of vectors to be classified may also be implemented in the following way.

Respectively processing each of the vectors to be classified as follows: calculating distances between the vectors to be classified and the K first clustering cluster centers to obtain K distance values; and determining the categories of the vectors to be classified based on the clustering cluster center corresponding to the smallest distance value among the K distance values.

By calculating distances between the vectors to be classified and the K first clustering cluster centers, it can be quantitatively determined whether the vectors to be classified are similar or identical to the first clustering cluster center.

For example, the K first clustering cluster centers may be represented as $\{C_1, C_2, \cdots, C_i, \cdots, C_K\}$, where $C_i$ represents the $i^{th}$ first clustering cluster center, i is an integer greater than or equal to 1 and less than or equal to K, and K is an integer greater than or equal to 1.

For each of vectors to be classified, K distance values may be obtained, and the K distance values may also be sorted, so as to obtain the smallest distance value among the K distance values, the smallest distance value can represent which vector to be classified is specifically closer to the vector to be classified. The first clustering cluster center corresponding to the smallest distance value is the clustering cluster center that is closest to the categories of the vectors to be classified, and the first clustering cluster center corresponding to the smallest distance value can represent the categories of the vectors to be classified.

By calculating the distances between the specific vectors, the differences between the respective vectors to be classified and the different first clustering cluster centers can be accurately measured, so as to determine that the first clustering cluster center corresponding to the smallest distance value can represent the categories of the vectors to be classified, accelerate the speed of determining the categories of the vectors to be classified, improve the accuracy of determination of the categories, and facilitate the subsequent processing of the vectors to be classified.

In some implementations, the processing of the tidal time information of the tidal cell to obtain a plurality of tidal periods in step 201 or step 405 may also be implemented in the following way.

Obtaining historical communication information of the tidal cell, where the historical communication information includes displacement information of the terminal in a predefined time period; determining a correlation between the displacement information of the terminal in the predefined time period and the tidal time information; dividing the tidal time information of the tidal cell based on the correlation, and determining the plurality of tidal time periods.

The historical communication information may be obtained in the way of obtaining a log file of the base station, and the displacement information of the terminal in the predefined time period can be obtained by parsing and extracting the location information of the terminals recorded in the log file.

The displacement information of the terminal in the predefined time period and the tidal time information are matched to determine whether the movement of the terminal changes in accordance with the change in the tidal time information, so as to determine a correlation between the displacement information of the terminal in the predefined time period and the tidal time information, and information of the time period in which the terminal occurred a regular movement can be characterized by the correlation.

By dividing the tidal time information of the tidal cell through the correlation, it is able to make the obtained plurality of tidal time periods accurately reflect the movement regularity of the terminals, and make different adjustments for different tidal time periods in order to adapt to the movement of the terminal, so that the terminal can obtain an optimal communication quality.

In some implementations, neighbor cell information of the tidal cell includes: handover frequency information of inter-cell handover occurred between the tidal cell and its neighbor cells within a predefined time length, or information about coverage overlapping between the tidal cell and its neighbor cells.

For example, if the handover frequency of the inter-cell handover that occurred between the tidal cell and a first neighbor cell within an hour is greater than a predefined frequency threshold (e.g., 9 times, or 10 times, etc.), it is indicated that the first neighbor cell is a neighbor cell to be processed, and that the directions of the RF antennas also need to be adjusted with respect to the first neighbor cell, due to the same degree of interference that occurred with respect to the first neighbor cell by the regular movement of the terminals within the tidal cell.

As another example, the coverage between a second neighbor cell and the tidal cell overlaps by 30%, and if the regular movement of the terminals within the overlapped coverage occurs, it will also generate a relevant impact on the allocation of communication resources to the second neighbor cell, and therefore, it is necessary to determine the second neighbor cell as a neighbor cell to be processed, so that, in the process of adjusting the antenna weights of the RF antennas of the tidal cell, it is also possible to perform a synchronized adjustments to antenna weights of the RF antennas of the second neighbor cell at the same time, in order to reduce the interference to the second neighbor cell and enhance communication quality of the second neighbor cell.

The determining a plurality of antenna weights corresponding to the tidal time period based on the plurality of tidal time periods and the neighbor cell information of the tidal cell in step S202 or step S406 may be implemented in the following way.

Selecting a plurality of neighbor cells to be processed from the neighbor cell information of the tidal cell based on the handover frequency information or the information about coverage overlapping, where the neighbor cells to be processed are neighbor cells in which the directions of the RF antennas need to be adjusted; obtaining a first measurement data of the tidal cell and a second measurement data of the plurality of neighbor cells to be processed, respectively; and performing a weight optimization processing on the tidal cell and the plurality of neighbor cells to be processed based on the K tidal time slots, the first measurement data, and the plurality of second measurement data, to obtain K sets of antenna weights corresponding to the tidal time slots, the set of antenna weights including the plurality of antenna weights.

The weight optimization processing is used to find the antenna weights that match the measurement data and conform to the distribution of the terminals in the tidal time period. The antenna weights enable the directions of the RF antennas to be adjusted to optimal positions, so that it may obtain a maximum utilizing efficiency of the communication resources within the cell in the cell optimization cluster, and make the terminals within the cell obtaining optimal communication quality.

It is to be understood that each set of antenna weights includes a plurality of antenna weights, and the number of antenna weights in the set of antenna weights is the sum of the number of neighbor cells to be processed and the number of tidal cells.

For example, a certain tidal cell corresponds to 6 neighbor cells to be processed, and only the antenna weights of the tidal cell may be adjusted; or 7 antenna weights in the set of antenna weights may be used to adjust the antenna weights of the tidal cell and its 6 neighbor cells to be processed respectively, so that it may obtain most reasonable allocation of the communication resources and enhance the communication quality of each cell.

As another example, 7 antenna weights may be used respectively to multiply with the widths of their corresponding RF antennas to obtain 7 adjusted coverage widths of RF antenna, so that the 7 adjusted coverage widths of RF antennas may satisfy the communication needs of the terminals within the tidal cell and its 6 neighbor cells to be processed respectively, i.e., the adjusted coverage widths of RF antennas can follow the regular movement of the terminals to provide the terminals with better communication quality, and to realize the dynamic coverage of communication signals of the tidal cell and its neighbor cells to be processed.

**In** some implementations, the set of antenna weights corresponding to the tidal time period includes: a first antenna weight and a plurality of second antenna weights. The number of second antenna weights is the same as the number of neighbor cells to be processed, the first antenna weight is used to adjust the directions of the RF antennas of the tidal cell, and the second antenna weight is used to adjust the directions of the RF antennas of the neighbor cells to be processed.

By adopting the first antenna weight for adjusting the directions of the RF antennas of the tidal cell, transmission directions of the corresponding RF signals can be adjusted with respect to the regular movement of the terminals in the tidal cell, so that the terminals can obtain the optimal communication quality; furthermore, by adopting the second antenna weight for adjusting the directions of the RF antennas of the neighbor cells to be processed, the accuracy of adjustment of the neighbor cells to be processed can be improved, so as to reduce the ratio of the interference of the neighbor cells to be processed due to the adjustment of the directions of the RF antennas of the tidal cell, and so that the terminals in the neighbor cells to be processed can obtain the optimal communication quality by means of the adjusted directions of the RF antennas thereof.

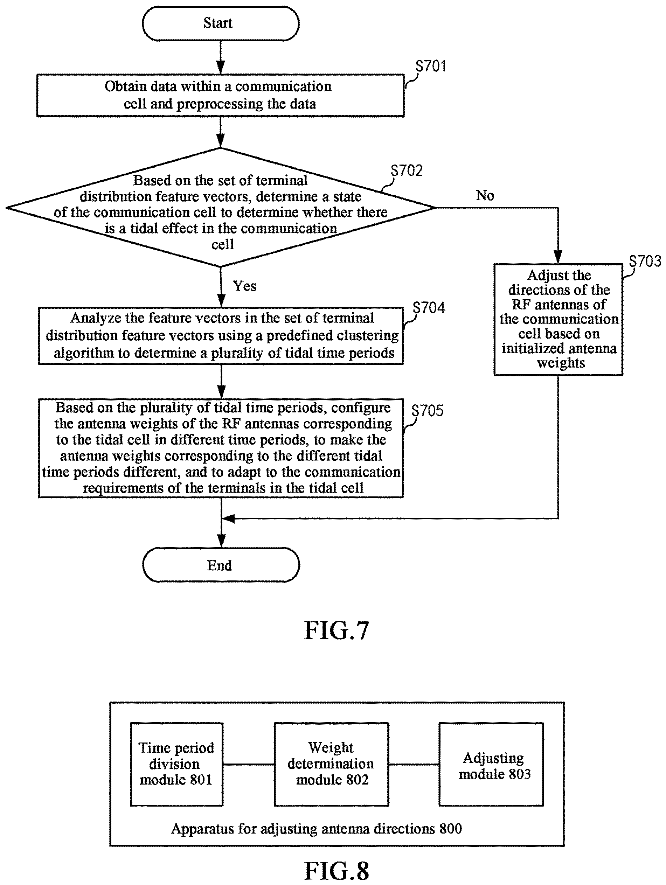

FIG. 7 shows a flow schematic diagram of a method for adjusting antenna directions provided by a further embodiment of the present application. As shown in FIG. 6, the method for adjusting antenna directions is applied to a base station. The method includes, but is not limited to, the following steps.

Step S701, obtaining data within a communication cell and preprocessing the data.

The data may include terminal distribution information, or may include DoA information of the communication cell, and may also include neighbor cell information of the communication cell, and the like. The terminal distribution information includes at least one of: location information of terminals, the number of RRC-connected terminals, timestamp information, or the number of activated terminals.

The preprocessing may be in the form of organizing and analyzing different data, and constructing feature vectors, to obtain a set of terminal distribution feature vectors. It facilitates subsequent determination and processing of tidal cells.

For example, data generated for a time length of each hour in a day is collected and obtained from a network management device or a data server at a time granularity (e.g., year/month/day/hour/minute, etc.), which includes but is not limited to the following information: timestamp information at a granularity in year/month/day/hour/minute, the number of RRC-connected terminals, the number of activated terminals, and HDoA information and VDoA information, and the like. A minimum threshold value may be set for the amount of data collected per hour (e.g., the minimum threshold value is represented as DataCollectThr).

A two-dimensional grid model is constructed by using the HDoA as the horizontal coordinate and the VDoA as the vertical coordinate. The HDoA may be divided based on the horizontal beam grid step (in unit of degree), for example, setting the range of the HDoA as - 60 degree to 60 degree; correspondingly, the VDoA may be divided based on the vertical beam grid step (in unit of degree), for example, setting the range of the VDoA as -20 degree to 20 degree.

Then, the number of all terminals within the communication cell is counted at a time granularity of hour; and based on the location information of the terminals, and region position delineated by each grid in the two-dimensional grid model, the location information of the respective terminals within the communication cell is delivered to different grids, to determine the proportion information of number of each grid in different time slots, where the proportion information of number can reflect a ratio of the number of terminals in the grid to the number of all terminals within the communication cell.

A set of terminal distribution feature vectors is determined based on the proportion information of number in each hour of time period, where the set of terminal distribution feature vectors comprises a plurality of feature vectors that are used to characterize the proportion information of number of terminals in the communication cell in a predefined time period.

For example, the set of terminal distribution feature vectors may include 24 feature vectors, each feature vector characterizing the proportion information of the number of terminals of the communication cell in each hour.

Step S702, based on the set of terminal distribution feature vectors, determining a state of the communication cell to determine whether there is a tidal effect in the communication cell.

For example, the feature vectors in the set of terminal distribution feature vectors may be analyzed for correlation, and the correlation between two adjacent feature vectors may be calculated, so that if there is movement regularity of the terminals in the communication cell at different time periods of the day, and if there is a large change in location of the movement, it may be determined that there is a tidal effect in the communication cell; otherwise, it is determined that there is no tidal effect in the communication cell.

For example, terminal distribution information in each hour is obtained for a certain communication cell for 24 hours of a day; calculating the correlation between the proportion information of terminals for every two adjacent hours, to obtain a plurality of correlation values; and then comparing each correlation value with a predefined correlation value threshold (e.g., setting the predefined correlation threshold to TideCorrThr), and in the case of determining that all of the correlation values corresponding to the communication cell are greater than TideCorrThr, it is determined that there is no tidal effect in the communication cell; otherwise, it is determined that there is a tidal effect in the communication cell.

In the case of determining that there is no tidal effect in the communication cell, step S703 is performed; in the case of determining that there is a tidal effect in the communication cell, step S704 is performed.

Step S703, adjusting the directions of the RF antennas of the communication cell based on initialized antenna weights.

The initialized antenna weights are based on antenna weights for a full time period (e.g., 24 hours throughout the day), and since there is no tidal effect in the communication cell, there is no need to dynamically adjust the directions of the corresponding RF antennas thereof; therefore, the initialized antenna weights can satisfy the need for adjusting the directions of the RF antennas of the communication cell.

When specifically realized, the initialized antenna weights will not reflect the distribution of terminals in each hour; the initialized antenna weights will not change throughout the day.

Step S704, analyzing the feature vectors in the set of terminal distribution feature vectors using a predefined clustering algorithm to determine a plurality of tidal time periods.

The predefined clustering algorithm is an algorithm that takes the feature vectors in the set of terminal distribution feature vectors as input parameters, and automatically mines out regularities among different feature vectors by an intelligent artificial learning method, thereby clustering feature vectors having the same or similar features into one category to obtain different categories. For example, a K-means clustering algorithm may be used to process feature vectors in the set of terminal distribution feature vectors to obtain a plurality of tidal time periods.

For example, terminal distribution feature vectors corresponding to each hour of 24 hours of a day are obtained to obtain the set of terminal distribution feature vectors $D=\{X_1,X_2,\cdots\cdots,X_{24}\}$; where $X_i$ represents a terminal distribution feature vector of in the $i^{th}$ hour, and i is an integer greater than or equal to 1 and less than or equal to 24.

The number of tidal time periods of the communication cell is set to K, and K is an integer greater than or equal to 1 and less than or equal to 24. For example, K is set to equal to 4, that is, there are 4 tidal time periods in a day. 4 tidal time periods are determined by iteratively estimating the clusters of respective feature vectors in the set D of terminal distribution feature vectors through a predefined clustering algorithm.

Step S705, based on the plurality of tidal time periods, configuring the antenna weights of the RF antennas corresponding to the tidal cell in different time periods, to make the antenna weights corresponding to the different tidal time periods different, and to adapt to the communication requirements of the terminals in the tidal cell.

Adjusting the directions of the RF antennas by the antenna weights corresponding to different tidal time periods can make the adjusted directions of the RF antennas more applicable to the real-time distribution of the terminals, so that the terminals can obtain the optimal communication quality, and the use experience at the terminals can be improved.

In some implementations, the antenna weights of the RF antennas of the tidal cell may be only adjusted, or the antenna weights of the RF antennas of a plurality of cells may be adjusted together in connection with the information of the tidal cell and its neighbor cells, in order to reduce the signal interference with other neighbor cells due to the change of the antenna weights.

For example, the neighbor cells of the tidal cell are selected based on a neighbor cell selection principle (e.g., based on handover frequency information of inter-cell handover occurred between the tidal cell and its neighbor cells in a predefined duration, or based on information about coverage overlapping between the tidal cell and its neighbor cells, etc.), and a plurality of neighbor cells to be processed are obtained (e.g., the number of neighbor cells to be processed is 10); and a cell optimization cluster is constructed based on the tidal cell and the plurality of neighbor cells to be processed (the cell optimization cluster comprises 1 tidal cell, and 10 neighbor cells to be processed).

Then, based on the number K of tidal time periods determined in step S704, measurements of the data are respectively performed for each cell in the cell optimization cluster to obtain a first measurement data corresponding to the tidal cell, and a second measurement data corresponding to respective neighbor cells to be processed; a weight optimization processing is performed on the tidal cell and the plurality of neighbor cells to be processed based on the K tidal time periods, the first measurement data, and the plurality of second measurements, and K sets of antenna weights corresponding to the tidal time periods is obtained.

The weight optimization processing is used to find the antenna weights that match the measurement data and conform to the distribution of the terminals in the tidal time period. The antenna weights enable the directions of the RF antennas to be adjusted to an optimal position, so that it may obtain a maximum utilization efficiency the communication resources within the cell in the cell optimization cluster, and so that the terminals within the cell can obtain optimal communication quality.

It is to be understood that each set of antenna weights includes a plurality of antenna weights, and the number of antenna weights in the set of antenna weights is the same as the number of cells in the cell optimization cluster.

In the method for adjusting antenna directions provided by present application, the directions of the RF antennas of the cells in the cell optimization cluster may be adjusted in different tidal time periods, using the antenna weights in the set of antenna weights corresponding to the tidal time period, respectively. For example, a switching method may be used to replace the set of antenna weights in different tidal time periods to adapt to the distribution of terminals in the tidal cell and to achieve optimization of cell coverage performance.

Moreover, by simultaneously adjusting the RF antennas for a plurality of cells in the cell optimization cluster, the interference to the neighbor cells of the tidal cell can be reduced, so that the tidal cell and its neighbor cells can work cooperatively to adapt to the tidal effect, and the utilization efficiency of the communication resources can be improved.

For example, if 11 cells are included in the cell optimization cluster, each set of antenna weights includes 11 antenna weights. For K tidal time periods, the 11 antenna weights in the set of antenna weights corresponding to the tidal time period are used in each tidal time period respectively, and the directions of the RF antennas of the 11 cells in the cell optimization cluster are adjusted respectively (e.g., the 11 antenna weights are used respectively to multiply with the width of their corresponding RF antennas, to obtain the 11 adjusted coverage widths of the RF antennas), so that the adjusted directions of RF antennas can be satisfied with terminal requirements in different tidal time periods.

In some implementations, respective antenna weights in the set of antenna weights corresponding to each tidal time period may be distributed to the corresponding RF antenna management module respectively through a network management module, so that the RF antenna management module may adaptively adjust the directions of their corresponding RF antennas to improve the accuracy of the coverage of the RF antenna.

In the method for adjusting antenna directions provided by present application, comprehensive data is obtained by collecting distribution data of end-users in the communication cell to facilitate subsequent processing; then quantitatively determining whether there is a tidal effect in the communication cell by calculating the correlation between the location information of terminals in two adjacent hours in the communication cell, and in the case of determining that there is a tidal effect, completing the automatic division of the plurality of tidal time periods by utilizing a predefined clustering algorithm, and based on the respective antenna weights in the set of antenna weights corresponding to the plurality of tidal time periods, adaptively switching the antenna weights in the tidal cell (and/or the neighbor cells of the tidal cell) by time period, so as to realize adjusting the directions of the RF antennas of the tidal cell, and the adjusted directions of the RF antennas is more conducive to providing communication services for the terminals within the tidal cell, so that the terminals can obtain better communication quality faster, and the use experience at the terminal is improve.

The following is a detailed description of an apparatus for adjusting antenna directions according to an embodiment of the present application in connection with the accompanying drawings. FIG. 8 shows a block diagram of the composition of an apparatus for adjusting antenna directions provided by the embodiment of the present application.

As shown in FIG. 8, the apparatus for adjusting antenna directions 800 includes, but is not limited to, the following modules.

A time period division module 801 is configured to process tidal time information of a tidal cell to obtain a plurality of tidal time periods, where the tidal cell is a communication cell in which there is a tidal effect.

A weight determination module 802 is configured to determine a plurality of antenna weights corresponding to the tidal time periods based on the plurality of tidal time periods and neighbor cell information of the tidal cell.

An adjusting module 803 is configured to adjust the directions of the RF antennas of the tidal cell based on the tidal time period and their corresponding antenna weights.

It is to be understood that the apparatus for adjusting antenna directions in the present embodiment may perform any one of the methods for adjusting antenna directions in the embodiments of the present application.

According to the apparatus for adjusting antenna directions in the embodiment of the present application, the tidal time information of the tidal cell is processed by the time period division module to obtain a plurality of tidal time periods, where the tidal cell is a communication cell in which there is a tidal effect, so as to be able to determine the feature information of the tidal cell in different tidal time periods, and to facilitate the base station to make different processing to the tidal cell in different tidal time periods; and the weight determination module determines a plurality of antenna weights corresponding to the tidal time periods based on the plurality of tidal time periods and the neighbor cell information of the tidal cell, and through the antenna weights corresponding to the tidal time periods, it can reflect the correspondence between the feature information and the weights of RF antennas in different tidal time periods, so that the antenna weights can more accurately reflect the directions of the RF antennas which need to be adjusted; the adjusting module adjusts the directions of the RF antennas of the tidal cell based on tidal time periods and their corresponding antenna weights, so that the adjusted directions of the RF antennas can be more conducive to providing communication services to the terminals in the tidal cell, so as to enable the terminals to obtain better communication quality faster and the use experience at the terminals will be improved.

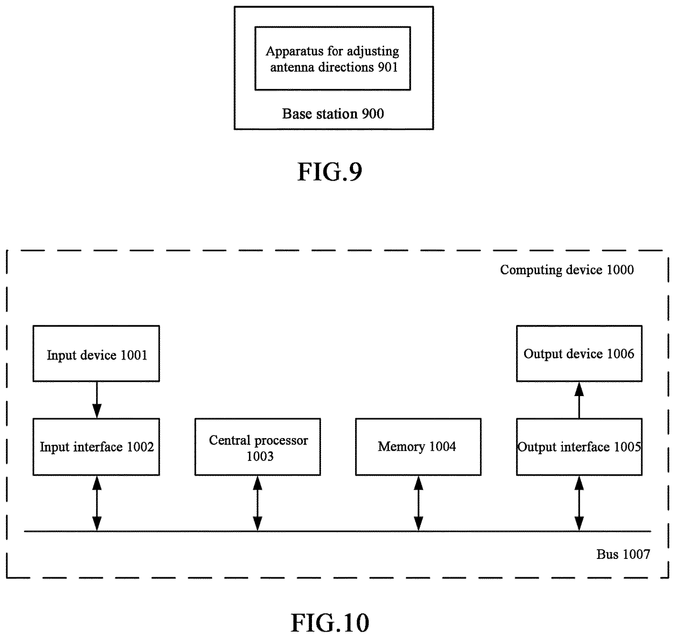

FIG. 9 shows a block diagram of a composition of a base station provided by an embodiment of the present application. As shown in FIG. 9, the base station 900 includes, but is not limited to, the following modules: an apparatus for adjusting antenna directions 901; the apparatus for adjusting antenna directions 901 is configured to perform any one of the methods for adjusting antenna directions in the embodiments of the present application.

For example, the apparatus for adjusting antenna directions 901 includes the following modules: a time period division module configured to process tidal time information of a tidal cell to obtain a plurality of tidal time periods, where the tidal cell is a communication cell in which there is a tidal effect. A weight determination module is configured to determine a plurality of antenna weights corresponding to the tidal time periods based on the plurality of tidal time periods and neighbor cell information of the tidal cell. An adjusting module is configured to adjust directions of RF antennas of the tidal cell based on the tidal time periods and their corresponding antenna weights.

In some implementations, the apparatus for adjusting antenna directions 901 further comprising: an obtaining module configured to obtain terminal distribution information in the communication cell; an analyzing module configured to analyze the terminal distribution information to determine whether there is a tidal effect in the communication cell; and a determination module configured to determine that, in the case of determining that there is a tidal effect in the communication cell, the communication cell is a tidal cell, and to obtain tidal time information of the tidal cell.

In some implementations, the terminal distribution information includes: location information of terminals; analyzing the terminal distribution information to determine whether there is a tidal effect in the communication cell, including: obtaining Direction of Arrival DoA information of the communication cell, where the DoA information includes: horizontal Direction of Arrival HDoA information and vertical Direction of Arrival VDoA information; based on the HDoA information and the VDoA information, constructing a two-dimensional grid model, the two-dimensional grid model comprising a plurality of grids; determining proportion information of number within a plurality of predefined time periods based on the location information of the respective terminals in the communication cell and the plurality of grids, where the proportion information of number is a ratio of the number of terminals in the grids to the number of all terminals in the communication cell; and determining whether there is a tidal effect in the communication cell based on the proportion information of number in the plurality of predefined time periods.

In some implementations, determining whether there is a tidal effect in a communication cell based on the proportion information of number in a plurality of predefined time periods comprises: determining a set of terminal distribution feature vectors, based on the proportion information of number in the plurality of predefined time periods, where the set of terminal distribution feature vectors comprises a plurality of feature vectors, where the feature vectors are used to characterize the proportion information of the number of terminals in the communication cell in the predefined time periods; calculating temporal correlation of two adjacent feature vectors respectively, to obtain a plurality of correlation values, the correlation values are used to characterize information on the proportion change of the number of terminals of the communication cell in different time periods; in the case determining that the plurality of correlation values exceed a predefined correlation value threshold, it is determined that there is a tidal effect in the communication cell; otherwise, it is determined that there is no tidal effect in the communication cell.

In some implementations, the terminal distribution information further comprises at least one of: a number of

# EP 4 535 849 A1

terminals that are radio resource control (RRC) connected, timestamp information, or a number of activated terminals.

In some implementations, the tidal time information comprising: proportion information of the number of terminals in the tidal cell in a predefined time period; processing the tidal time information of the tidal cell to obtain a plurality of tidal time periods comprising: randomly selecting K feature vectors from a set of terminal distribution feature vectors as a first clustering cluster center, and labeling the feature vectors other than the K feature vectors in the set of terminal distribution feature vectors as vectors to be classified; processing a plurality of vectors to be classified to determine categories of the plurality of vectors to be classified based on the K first clustering cluster centers; in the case of determining the completion of the classification of the vectors to be classified, determining the K second clustering cluster centers; in the case of determining that the second clustering cluster centers are different from the first clustering cluster centers, continuing to process the plurality of vectors to be classified based on the K second clustering cluster centers, until the obtained K $N^{th}$ clustering cluster centers are the same as the $(N-1)^{th}$ clustering cluster centers, where K and N are integers greater than 1; and determining K tidal time periods based on the K $N^{th}$ clustering cluster centers.

In some implementations, processing the plurality of vectors to be classified to determine the categories of the plurality of vectors to be classified based on the K first clustering cluster centers comprises: respectively processing each of the vectors to be classified as follows: calculating distances between the vectors to be classified and the K first clustering cluster centers to obtain K distance values; and determining the categories of the vectors to be classified based on the clustering cluster center corresponding to the smallest distance value among the K distance values.

In some implementations, processing the tidal time information of the tidal cell to obtain the plurality of tidal time periods comprises: obtaining historical communication information of the tidal cell, where the historical communication information comprises displacement information of the terminal in a predefined time period; determining a correlation between the displacement information of the terminal in the predefined time period and the tidal time information; dividing the tidal time information of the tidal cell based on the correlation, and determining the plurality of tidal time periods.

In some implementations, the neighbor cell information of the tidal cell includes: handover frequency information of inter-cell handover occurred between the tidal cell and its neighbor cells in the predefined duration, or information about coverage overlapping between the tidal cell and its neighbor cells; determining a plurality of antenna weights corresponding to the tidal time periods based on the plurality of tidal time periods and the neighbor cell information of the tidal cell including: selecting a plurality of neighbor cells to be processed from the neighbor cell information of the tidal cell based on the handover frequency information or the information about coverage overlapping, where the neighbor cells to be processed are neighbor cells in which the directions of the RF antennas need to be adjusted; obtaining a first measurement data of the tidal cell and a second measurement data of the plurality of neighbor cells to be processed, respectively; and performing a weight optimization processing on the tidal cell and the plurality of neighbor cells to be processed based on the K tidal time periods, the first measurement data, and the plurality of second measurement data, to obtain K sets of antenna weights corresponding to the tidal time periods, the set of antenna weights including a plurality of antenna weights.

In some implementations, the set of antenna weights corresponding to the tidal time periods includes: a first antenna weight and a plurality of second antenna weights; where the number of second antenna weights is the same as the number of neighbor cells to be processed, the first antenna weight is used to adjust the directions of the RF antennas of the tidal cell, and the second antenna weights are used to adjust the directions of the RF antennas of the neighbor cells to be processed.

According to a base station provided by the present application, a plurality of tidal time periods are obtained by processing tidal time information of a tidal cell, where the tidal cell is a communication cell in which there is a tidal effect, so as to be able to determine the feature information of the tidal cell in different tidal time periods, and to facilitate the base station to make different processing for the tidal cell in different tidal time periods; and determining a plurality of antenna weights corresponding to the tidal time periods based on the plurality of tidal time periods and the neighbor cell information of the tidal cell, and through the antenna weights corresponding to the tidal time periods, it will be able to reflect the correspondence between the characteristic information and the weights of RF antennas in different tidal time periods, so as to enable the antenna weights to more accurately reflect the directions of the RF antennas which need to be adjusted; adjusting the directions of the RF antennas of the tidal cell based on the tidal time periods and their corresponding antenna weights, so that the adjusted directions of the RF antennas can be more conducive to providing communication services to the terminals in the tidal cell, so as to enable the terminals to obtain better communication quality faster and the use experience at the terminals will be improved.

It is to be understood that the present application is not limited to the particular configurations and processing described in the embodiments above and shown in the drawings. For the convenience and brevity of the description, the detailed description of the known methods is omitted herein, and the specific working processes of the systems, modules and units described above can be referred to the corresponding processes in the foregoing embodiments of the methods, and will not be repeated herein.

FIG. 10 shows a structural diagram of an exemplary hardware architecture of a computing device of the method and apparatus for adjusting antenna directions according to embodiments of the present application.

As shown in FIG. 10, a computing device 1000 includes an input device 1001, an input interface 1002, a central processor 1003, a memory 1004, an output interface 1005, and an output device 1006. Among them, the input interface 1002, the central processor 1003, the memory 1004, and the output interface 1005 are connected to each other via a bus 1007, and the input device 1001 and the output device 1006 are connected to the bus 1007 via the input interface 1002 and the output interface 1005, respectively, and are thus connected to other components of the computing device 1000.

The input device 1001 receives input information from external side and transmits the input information to the central processor 1003 via the input interface 1002; the central processor 1003 processes input information based on computer-executable instructions stored in the memory 1004 to generate output information, stores the output information temporarily or permanently in the memory 1004, and then communicates the output information to the output device 1006 via the output interface 1005; and the output device 1006 outputs the output information to the external side of the computing device 1000 for use by a user.

In some implementations, the computing device shown in FIG. 10 may be implemented as an electronic device that may include: a memory configured to store a program; and a processor configured to run the program stored in the memory to perform the method of adjusting the antenna orientation described in the above embodiment.

In some implementations, the computing device shown in FIG. 10 may be implemented as a system for adjusting antenna direction, the system for adjusting antenna directions may comprise: a memory, configured to store a program; and a processor, configured to run the program stored in the memory to perform the method for adjusting antenna directions described in the above embodiment.

Embodiments of the present application further provide a computer-readable storage medium having a computer program stored thereon, the computer program when executed by a processor implementing the above method for adjusting antenna directions.

The above-described embodiments are merely exemplary embodiments of the present application and are not intended to limit protection scope of the present application. In general, a variety of embodiments of the present application may be implemented in hardware or specialized circuitry, software, logic, or any combination thereof. For example, some aspects may be implemented in hardware, while other aspects may be implemented in firmware or software that can be executed by a controller, microprocessor, or other computing apparatus, although the present application is not limited thereto.

Embodiments of the present application may be implemented by execution of computer program instructions by a data processor of a mobile apparatus, for example, in a processor entity, or by hardware, or by a combination of software and hardware. The computer program instructions may be assembly instructions, instruction set architecture (ISA) instructions, machine instructions, machine-related instructions, microcode, firmware instructions, state setting data, or source or object code written in any combination of one or more programming languages.

Any of the block diagrams of the logic flow in the accompanying drawings of the present application may represent program steps, or may represent interconnected logic circuits, modules, and functions, or may represent combinations of program steps with logic circuits, modules, and functions. The computer program may be stored on a memory. The memory may be of any type suitable for the local technological environment and may be implemented using any suitable data storage technology, such as, but not limited to, read-only memory (ROM), random-access memory (RAM), optical memory devices and systems (Digital Versatile Discs DVDs or CD-ROMs), and the like. Computer readable media may include non-transient storage media. Data processors may be of any type suitable for the local technical environment, such as, but not limited to, general-purpose computers, specialized computers, microprocessors, digital signal processors (DSPs), application-specific integrated circuits (ASICs), programmable logic devices (FGPAs), and processors based on multi-core processor architectures.

A detailed description of exemplary embodiments of the present application has been provided above by way of exemplary and non-limiting examples. However, when considered in conjunction with the accompanying drawings and claims, a variety of modifications and adjustments to the above embodiments will be apparent to those skilled in the art without departing from the scope of the present application. Accordingly, the proper scope of the present application will be determined from the claims.

**Claims**

1. A method for adjusting antenna directions, the method comprises:

    processing tidal time information of a tidal cell to obtain a plurality of tidal time periods, wherein the tidal cell is a communication cell in which there is tidal effect;
    determining a plurality of antenna weights corresponding to the tidal time periods based on the plurality of tidal time periods and neighbor cell information of the tidal cell; and
    adjusting directions of RF antennas of the tidal cell based on the tidal time periods and the antenna weights corresponding to the tidal time periods.

2. The method according to claim 1, further comprising:

prior to processing the tidal time information of the tidal cell to obtain the plurality of tidal time periods, obtaining terminal distribution information within the communication cell;

analyzing the terminal distribution information to determine whether there is a tidal effect in the communication cell; and

in response to determining that there is a tidal effect in the communication cell, determining that the communication cell is a tidal cell, and obtaining the tidal time information of the tidal cell.

3. The method according to claim 2, wherein the terminal distribution information comprises location information of the terminals;

the analyzing of the terminal distribution information to determine whether there is a tidal effect in the communication cell comprises:

obtaining Direction of Arrival (DoA) information of the communication cell, wherein the DoA information comprises Horizontal Direction of Arrival (HDoA) information and Vertical Direction of Arrival (VDoA) information;

constructing a two-dimensional grid model comprising a plurality of grids based on the HDoA information and the VDoA information;

determining proportion information of number in a plurality of predefined time periods based on the positional information of respective terminal in the communication cell and the plurality of grids, wherein the proportion information of the number is a ratio of the number of terminals in the grid to the number of all terminals in the communication cell; and

determining whether there is a tidal effect in the communication cell based on the proportion information of number within the plurality of predefined time periods.

4. The method according to claim 3, wherein the determining whether there is a tidal effect in the communication cell based on the proportion information of number within the plurality of predefined time period comprises:

determining a set of terminal distribution feature vectors based on the proportion information of number within the plurality of predefined time period, wherein the set of terminal distribution feature vectors comprises a plurality of feature vectors, and the feature vectors are used to characterize the proportion information of a number of terminals in the predefined time period in the communication cell;

respectively calculating a temporal correlation of two adjacent feature vectors to obtain a plurality of correlation values, wherein the correlation values are used to characterize change information of a proportion of a number of terminals in the communication cell in different time periods;

in response to determining that the plurality of correlation values exceed a predefined correlation value threshold, determining that there is a tidal effect in the communication cell; and

in response to determining that the plurality of correlation values do not exceed the predefined correlation value threshold, determining that there is no tidal effect in the communication cell.

5. The method according to claim 2, wherein the terminal distribution information further comprises at least one of: a number of terminals that are radio resource control (RRC) connected, timestamp information, or a number of activated terminals.

6. The method according to claim 4, wherein the tidal time information comprises proportion information of the number of terminals in the tidal cell in the predefined time period;

the processing of the tidal time information of the tidal cell to obtain a plurality of tidal time periods comprises:

randomly selecting K feature vectors from a set of terminal distribution feature vectors as first clustering cluster centers, and labeling the feature vectors other than the K feature vectors in the set of terminal distribution feature vectors as vectors to be classified;

processing a plurality of vectors to be classified to determine categories of the plurality of vectors to be classified based on the K first clustering cluster centers;

in response to determining the completion of classification of the vectors to be classified, determining the K second clustering cluster centers; and

in response to determining that the second clustering cluster centers are different from the first clustering cluster centers, continuing to process the plurality of vectors to be classified based on the K second clustering cluster centers, until the obtained K N$^{th}$ clustering cluster centers are the same as the (N-1)$^{th}$ clustering cluster centers, wherein K and N are integers greater than 1; and

determining the K tidal time periods based on the K N$^{th}$ clustering cluster centers.

7. The method according to claim 6, wherein the processing the plurality of vectors to be classified to determine the categories of the plurality of vectors to be classified based on the K first clustering cluster centers comprises: respectively processing each of the vectors to be classified as follows:

calculating distances between the vectors to be classified and the K first clustering cluster centers to obtain K distance values; and
determining the categories of the vectors to be classified based on the clustering cluster center corresponding to the smallest distance value among the K distance values.

8. The method according to claim 4, wherein the processing the tidal time information of the tidal cell to obtain the plurality of tidal time periods comprises:

obtaining historical communication information of the tidal cell, wherein the historical communication information comprises displacement information of the terminal in a predefined time period;
determining a correlation between the displacement information of the terminal in the predefined time period and the tidal time information; and
dividing the tidal time information of the tidal cell based on the correlation, and determining the plurality of tidal time periods.

9. The method according to claim 6 or 8, wherein the neighbor cell information of the tidal cell comprises: handover frequency information of inter-cell handover occurred between the tidal cell and its neighbor cells in the predefined duration, or information about coverage overlapping between the tidal cell and its neighbor cells;
determining a plurality of antenna weights corresponding to the tidal time periods based on the plurality of tidal time periods and the neighbor cell information of the tidal cell comprising:

selecting a plurality of neighbor cells to be processed from the neighbor cell information of the tidal cell based on the handover frequency information or the information about coverage overlapping, wherein the neighbor cells to be processed are neighbor cells in which the directions of the RF antennas need to be adjusted;
respectively obtaining a first measurement data of the tidal cell and a second measurement data of the plurality of neighbor cells to be processed; and
performing a weight optimization processing on the tidal cell and the plurality of neighbor cells to be processed based on the K tidal time periods, the first measurement data, and the plurality of second measurement data, to obtain K sets of antenna weights corresponding to the tidal time periods, the set of antenna weights comprising a plurality of antenna weights.

10. The method according to claim 9, wherein the set of antenna weights corresponding to the tidal time periods comprises: a first antenna weight and a plurality of second antenna weights;
wherein the number of second antenna weights is the same as the number of neighbor cells to be processed, the first antenna weight is used to adjust the directions of the RF antennas of the tidal cell, and the second antenna weights are used to adjust the directions of the RF antennas of the neighbor cells to be processed.

11. An apparatus for determining antenna weights, comprising:

a time period division module configured to process tidal time information of a tidal cell to obtain a plurality of tidal time period, wherein the tidal cell is a communication cell in which there is a tidal effect;
a weight determination module configured to determine a plurality of antenna weights corresponding to the tidal time periods based on the plurality of tidal time periods and the neighbor cell information of the tidal cell; and
an adjusting module configured to adjust directions of RF antennas of the tidal cell based on the tidal time periods and the antenna weights corresponding to the tidal time periods.

12. A base station comprising an apparatus for adjusting antenna directions;
the apparatus for adjusting the antenna directions is configured to perform the method for adjusting antenna directions of any of claims 1-10.

13. An electronic device comprising:

   at least one processor; and
   a memory having at least one computer program stored thereon, the at least one computer program when executed by the at least one processor, cause the at least one processor to implement the method for adjusting antenna directions of any of claims 1-10.

14. A readable storage medium storing a computer program, the computer program when executed by a processor implementing the method for adjusting antenna directions of any of claims 1-10.

Base station 101

Working area 102

Residential area 103

User 104

# FIG.1

Start

Process tidal time information of a tidal cell to obtain a plurality of tidal time periods

S201

Determine a plurality of antenna weights corresponding to the tidal time periods based on the plurality of tidal time periods and neighbor cell information of the tidal cell

S202

Adjust directions of RF antennas of the tidal cell based on the tidal time periods and their corresponding antenna weights

S203

End

# FIG.2

First region 321

Second region 322

Third region 323

Base station 310

Fourth region 324

FIG.3

Start

Obtain terminal distribution information
within a communication cell —⟋ S401

Analyze the terminal
distribution information to determine whether there is
a tidal effect in the communication cell —⟋ S402

No →

Yes ↓

Determine the communication cell as a tidal cell,
and obtaining tidal time information of the tidal cell —⟋ S404

Process the tidal time information of the tidal
cell to obtain a plurality of tidal time periods —⟋ S405

Determine a plurality of antenna weights corresponding
to the tidal time periods based on the plurality of tidal
time periods and neighbor cell information of the tidal cell —⟋ S406

Adjust the directions of the RF antennas of the tidal
cell based on the tidal time periods and its
corresponding antenna weights —⟋ S407

Adjust directions
of RF antennas of
the communication
cell based on
initialized antenna
weights —⟋ S403

End

FIG.4

FIG.5

Start

Randomly select K feature vectors from the set of terminal distribution feature vectors as a first clustering cluster center

S601

Label the feature vectors other than the K feature vectors in the set of terminal distribution feature vectors as vectors to be classified

S602

Process a plurality of vectors to be classified to determine categories of the plurality of vectors to be classified based on the K first clustering cluster centers

S603

In the case of determine the completion of classification of the vectors to be classified, determining the K second clustering cluster centers

S604

Determine whether the second clustering cluster center is the same as the first clustering cluster center

S605

Yes

No

Continue to process the plurality of vectors to be classified based on the K second clustering cluster centers, until the obtained K N$^{th}$ clustering cluster centers are the same as the (N-1)$^{th}$ clustering cluster centers

S606

Determine K tidal time periods based on the K N$^{th}$ clustering cluster centers

S607

End

FIG.6

Start

Obtain data within a communication
cell and preprocessing the data
S701

Based on the set of terminal
distribution feature vectors, determine a state
of the communication cell to determine whether there
is a tidal effect in the communication
cell
S702

No

Yes

Adjust the
directions of the
RF antennas of
the communication
cell based on
initialized antenna
weights
S703

Analyze the feature vectors in the set of terminal
distribution feature vectors using a predefined clustering
algorithm to determine a plurality of tidal time periods
S704

Based on the plurality of tidal time periods, configure
the antenna weights of the RF antennas corresponding
to the tidal cell in different time periods, to make the
antenna weights corresponding to the different tidal
time periods different, and to adapt to the communication
requirements of the terminals in the tidal cell
S705

End

FIG.7

| Time period division module 801 | Weight determination module 802 | Adjusting module 803 |
| --- | --- | --- |

Apparatus for adjusting antenna directions 800

FIG.8

FIG.9

FIG.10

<div align="center">

**INTERNATIONAL SEARCH REPORT**

</div>

| | International application No. |
|---|---|
| | **PCT/CN2023/095014** |

**A. CLASSIFICATION OF SUBJECT MATTER**

H04W16/28(2009.01)i

According to International Patent Classification (IPC) or to both national classification and IPC

**B. FIELDS SEARCHED**

Minimum documentation searched (classification system followed by classification symbols)

IPC:H04W，H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT: 潮汐, 潮汐时段, 潮汐效应, 方向, 邻区, 邻区信息, 邻小区, 天线, 天线权值, 相邻小区, antenna, direction, tidal, effect

**C. DOCUMENTS CONSIDERED TO BE RELEVANT**

| Category* | Citation of document, with indication, where appropriate, of the relevant passages | Relevant to claim No. |
|---|---|---|
| X | CN 114374986 A (CHINA MOBILE GROUP ZHEJIANG COMPANY LIMITED et al.) 19 April 2022 (2022-04-19) description, paragraphs [0058]-[0107] | 1-14 |
| A | CN 109495146 A (GUO JINGE) 19 March 2019 (2019-03-19) entire document | 1-14 |
| A | CN 114189883 A (ZTE CORP.) 15 March 2022 (2022-03-15) entire document | 1-14 |
| A | WO 2021253159 A1 (TELEFONAKTIEBOLAGET LM ERICSSON (PUBL)) 23 December 2021 (2021-12-23) entire document | 1-14 |
| A | WO 2022083275 A1 (INSPUR TIANYUAN COMMUNICATION INFORMATION SYSTEM CO., LTD.) 28 April 2022 (2022-04-28) entire document | 1-14 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 August 2023** | **07 August 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095014**

| Patent document cited in search report | | | Publication date (day/month/year) | Patent family member(s) | | | Publication date (day/month/year) |
|---|---|---|---|---|---|---|---|
| CN | 114374986 | A | 19 April 2022 | None | | | |
| CN | 109495146 | A | 19 March 2019 | None | | | |
| CN | 114189883 | A | 15 March 2022 | None | | | |
| WO | 2021253159 | A1 | 23 December 2021 | EP | 4165787 | A1 | 19 April 2023 |
| | | | | US | 20230239030 | A1 | 27 July 2023 |
| WO | 2022083275 | A1 | 28 April 2022 | CN | 112260731 | A | 22 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210580789